# EUROPÄISCHE PATENTSCHRIFT

(11) **EP 2 507 115 B1**
(45) Veröffentlichungstag und Bekanntmachung des Hinweises auf die Patenterteilung: **30.10.2013**
(21) Anmeldenummer: 10787293.9
(22) Anmeldetag: 26.11.2010
(51) Int. Cl.: B62D 25/08

(54) **TIEFGEZOGENE MULDE IN EINER PLATTE**
DEEP-DRAWN RECESS IN A PANEL
CAVITÉ EN AUGE OBTENUE PAR EMBOUTISSAGE PROFOND DANS UNE PLAQUE

(30) Priorität: 05.12.2009 DE 102009057169
(43) Veröffentlichungstag der Anmeldung: 10.10.2012
(73) Patentinhaber: Volkswagen Aktiengesellschaft, 38436 Wolfsburg (DE)
(72) Erfinder: RAFFEL, Knut, 38102 Braunschweig (DE); DANG, Tran Minh, 38440 Wolfsburg (DE)
(86) Internationale Anmeldenummer: PCT/EP2010/007174
(87) Internationale Veröffentlichungsnummer: WO 2011/066924

(56) Entgegenhaltungen:
- EP-A2- 1 247 727
- EP-A2- 1 772 355
- DE-A1-102004 034 072
- JP-A- 63 043 874
- US-A- 5 860 687
- US-A1- 2004 140 690

## Beschreibung

Die Erfindung betrifft eine Mulde in einer Platte, insbesondere in einer Bodenplatte einer Fahrzeugkarosserie, gemäß der Merkmalskombination des Patentanspruchs 1.

Große beispielsweise tiefgezogene Mulden in Karosserien von Fahrzeugen, insbesondere Kraftfahrzeugen, wie z. B. Kofferraum- und Reserveradmulden aber auch Ölwannen, müssen ausreichende Bodensteifigkeiten und Festigkeiten aufweisen, um zum einen statischen Belastungen durch Nutzlasten und Missbrauchslasten Stand halten zu können und zum anderen Bodeneigenschwingungen in einem ausreichend hohen Frequenzbereich oberhalb einer dominanten Anregungsquelle verschieben und somit Resonanzen vermeiden zu können.

Um diesen Anforderungen gerecht zu werden, ist es seit langem bekannt, die Muldenböden derartiger Mulden mittels profilierter Träger oder sogenannter Sternträger zu versteifen, welches jedoch mit erhöhten Kosten und insbesondere auch mit einem erhöhten Gewicht einhergeht und demgemäß dem seitens der Fahrzeughersteller aus ökologischen Gründen angestrebten Leichtbau widerspricht. Des Weiteren ist es aus der DE 102 29 752 A1 bekannt, ein Ladebodenblech mittels eines Schottbleches zu versteifen, welches seinerseits in eine Ersatzradmulde des Ladebodenbleches quer zur Längsachse desselben eingesetzt und mit demselben verschweißt ist.

Aus der JP 63043874 A, der JP 11208520 A und der DE 103 61 045 A1 und der US 5 860 687 ist es ferner bekannt, Karosserieflächen, insbesondere Bodenflächen eines Fahrzeugs mittels einer Mehrzahl an sich bekannter in die Bodenflächen eingeformter Sicken zu versteifen, die sich als Bodensicken von horizontalen Abschnitten der Bodenfläche ausgehend bis in vertikale bzw. nahezu vertikale Abschnitte der Bodenfläche, beispielsweise im Bereich eines Mitteltunnels, hinein erstrecken können und somit Wandsicken ausbilden. In der Praxis ist jedoch festzustellen, dass insbesondere bei tiefgezogenen Mulden mit großer Ziehtiefe das Material im Übergangsbereich der auszubildenden Sicke vom Muldenboden zur Muldenwandung ungleichmäßig gestreckt wird und in der Folge zum Reißen neigt.

Des Weiteren wurde in der Praxis gefunden, dass gerade bei besagten tiefen Mulden sich die Muldenwandung und insbesondere der Übergang der Sicke vom horizontalen in den vertikalen Abschnitt einer Mulde sich derart signifikant auswirkt, dass bei einer Vielzahl nebeneinander angeordneter Sicken der oben beschriebenen Art der Berandungbereich des horizontalen Abschnittes bzw. Muldenbodens der Mulde zum vertikalen Abschnitt bzw. zur Muldenwandung sozusagen "Ziehharmonika"-ähnlich ausgebildet ist und kaum Steifigkeit im besagten Berandungsbereich aufbringen kann, so dass trotz besagter Sickenversteifung weiteres großes Versteifungspotential ungenutzt bleibt. Hier setzt die nachfolgend beschriebene Erfindung an.

Aufgabe der Erfindung ist es, unter Beibehaltung der Vorteile von Sickenstrukturen mittels einfacher und kostengünstiger Maßnahmen die Steifigkeit und Festigkeit einer Mulde in einer Platte, insbesondere in einer Bodenplatte einer Fahrzeugkarosserie, weiter zu erhöhen.

Gelöst wird die gestellte Aufgabe demnach durch eine Mulde in einer Platte, insbesondere in einer Bodenplatte einer Fahrzeugkarosserie, mit einem Muldenboden, der seinerseits in eine Muldenwandung übergeht, wobei die Mulde eine oder mehrere den Muldenboden versteifende erste Bodensicken und eine oder mehrere die Muldenwandung versteifende erste Wandsicken aufweist, wobei zumindest eine erste Bodensicke und zumindest eine zugeordnete erste Wandsicke derart in einer gemeinsamen vertikalen Ebene angeordnet und derart ausgeformt sind, dass die Profilstruktur der ersten Bodensicke im Übergangsbereich vom Muldenboden zur Muldenwandung an die Profilstruktur der zugeordneten ersten Wandsicke anschließt, und wobei die Ausformung der besagten ersten Wandsicke im Hinblick auf die Ausformung der ersten Bodensicke derart geändert ist, dass die erste Bodensicke nach Mulde-innen und die zugeordnete erste Wandsicke nach Mulde-außen oder umgekehrt ausgeformt sind.

Durch diese Maßnahme ist im Übergangsbereich der ersten Bodensicke zur ersten Wandsicke respektive im betreffenden Übergangsbereich vom Muldenboden zur Muldenwandung sozusagen ein "Nulldurchgang", d. h., ein unverformter zug- und drucksteifer Bereich in Umfangsrichtung der Mulde geschaffen, der sich besonders vorteilhaft auf die Steifigkeit und Festigkeit der Mulde und deren Resonanzverhalten auswirkt.

Die Unteransprüche beschreiben bevorzugte Weiterbildungen oder Ausgestaltungen der Erfindung.

Danach kann die Mulde des Weiteren eine oder mehrere den Muldenboden versteifende zweite Bodensicken aufweisen, die ihrerseits quer zu den ersten Bodensicken ausgerichtet und angeordnet sind, wobei zumindest eine zweite Bodensicke und zumindest eine zugeordnete zweite Wandsicke derart in einer gemeinsamen vertikalen Ebene angeordnet und derart ausgeformt sind, dass die Profilstruktur der zweiten Bodensicke im Übergangsbereich vom Muldenboden zur Muldenwandung an die Profilstruktur der zugeordneten zweiten Wandsicke anschließt, und wobei die Ausformung der besagten zweiten Wandsicke im Hinblick auf die Ausformung der zweiten Bodensicke derart geändert ist, dass die zweite Bodensicke nach Mulde-innen und die zugeordnete zweite Wandsicke nach Mulde-außen oder umgekehrt ausgeformt sind. Auch diese Maßnahme trägt vorteilhaft zur definierten Einstellung sowohl der Festigkeit und Steifigkeit der Mulde als auch deren Resonanzverhaltens bei.

Sind in vorteilhafter Weise eine Mehrzahl benachbart angeordneter Bodensicken und benachbart angeordneter, den Bodensicken zugeordneter Wandsicken vorgesehen, sind die benachbarten Bodensicken und die benachbarten Wandsicken jeweils alternierend nach Muldeinnen oder Mulde-außen ausgeformt, wodurch wellenförmige Querschnitte im Muldenboden und in der Muldenwandung erzeugbar bzw. erzeugt sind, die ihrerseits im unverformten zug- und drucksteifen Berandungsbereich der Mulde aneinander angeschlossen und nach Art eines steifen Zug-Druck-Bandes in Umfangsrichtung der Mulde gleichzeitig fixiert sind.

Wie die Erfindung noch vorsieht, können gemäß einer ersten zweckmäßigen Ausgestaltung eine Mehrzahl erster Boden- und zugeordneter Wandsicken und/oder eine Mehrzahl zweiter Boden- und zugeordneter Wandsicken jeweils zueinander achsparallel ausgerichtet und angeordnet sein, wodurch insbesondere Mulden mit Muldenböden, die überwiegend eine Grundfläche aufweisen, die an die Grundfläche eines Polygons angelehnt ist, vorteilhaft großflächig mit der erfindungsgemäßen Sickenstruktur ausgestattet werden können. Demgegenüber kann es auch angezeigt sein, eine Mehrzahl erster Boden- und zugeordneter Wandsicken derart zueinander auszurichten und anzuordnen, dass ein strahlen- oder sternförmiges Sickenbild realisiert ist, wodurch insbesondere Mulden mit Muldenböden, die zumindest abschnittsweise eine gerundete oder eine kreisförmige Grundfläche aufweisen, vorteilhaft großflächig mit der erfindungsgemäßen Sickenstruktur ausgestattet werden können.

In besonders vorteilhafter Ausgestaltung der Erfindung können bei einer Mehrzahl erster oder/und zweiter Boden- und zugeordneter Wandsicken dieselben derart angeordnet sein, dass der Übergangsbereich vom Muldenboden zur Muldenwandung zumindest abschnittsweise nach Art des oben bereits erwähnten und in besagten Übergangsbereich integrierten Zug-Druck-Bandes in Umfangsrichtung der Mulde ausgebildet ist, welches bei optimaler Ausführung des Sickenbildes die Bodenfläche des Muldenbodens vollständig umschließt und denselben sozusagen gespannt hält.

Was die Mulde an sich anbelangt, kann dieselbe vorteilhaft in eine Bodenplatte aus Metall, einem Kunststoff, einem Verbundwerkstoff oder jedwedem anderen denkbaren geeigneten Werkstoff einstückig eingeformt oder als separates, vorgefertigtes Anbauteil aus besagtem Werkstoff in eine vorbereitete Öffnung einer Bodenplatte eingesetzt und an derselben befestigt sein. Weiter vorteilhaft kann die Mulde dabei nach einem an sich bekannten Tiefzieh-Verfahren hergestellt sein.

Die Erfindung wird nachstehend anhand der in den Zeichnungen schematisch dargestellten Ausführungsbeispiele näher erläutert. Es zeigen:
- Fig. 1: eine perspektivische Ansicht einer Mulde der gattungsgemäßen Art, ausgestattet mit Versteifungssicken nach dem Stand der Technik,
- Fig. 2: den Schnitt I-I nach Fig. 1,
- Fig. 3: eine Detailansicht des Übergangsbereiches des Muldenbodens zur Muldenwandung besagter Mulde nach Fig. 1,
- Fig. 4: den Schnitt II-II der Mulde nach Fig. 2 im unbelasteten und belasteten Zustand der Mulde,
- Fig. 5: den Schnitt III-III der Mulde nach Fig. 2 im unbelasteten und belasteten Zustand der Mulde,
- Fig. 6: eine perspektivische Ansicht einer erfindungsgemäß ausgebildeten, stirnseitig offenen Mulde,
- Fig. 7: die Ansicht "Z" nach Fig. 6,
- Fig. 8: eine Detailansicht des Übergangsbereiches des Muldenbodens zur Muldenwandung besagter Mulde nach Fig. 7,
- Fig. 9: eine perspektivische Ansicht einer erfindungsgemäß ausgebildeten, umlaufend geschlossenen Mulde,
- Fig. 10: den Schnitt IV-IV nach Fig. 9,
- Fig. 11: eine umlaufend geschlossenen Mulde gemäß einer zweiten Ausgestaltungsvariante, und,
- Fig. 12: eine umlaufend geschlossenen Mulde gemäß einer dritten Ausgestaltungsvariante.

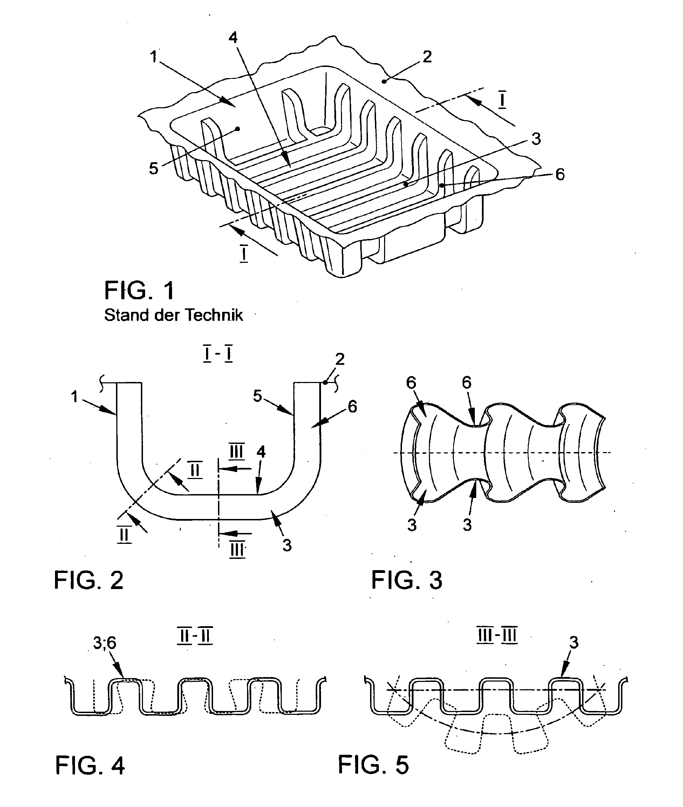

Fig. 1 zeigt zunächst eine aus einer Platine aus Metallblech oder Kunststoff nach einem an sich bekannten, und demgemäß nicht näher zu erläuternden Tiefzieh-Verfahren hergestellte Mulde 1, die ihrerseits in eine Bodenplatte 2 einer Karosserie, insbesondere einer Fahrzeugkarosserie, aus Metall, einem Kunststoff, einem Verbundwerkstoff oder jedwedem anderen denkbaren geeigneten Werkstoff einstückig eingeformt ist.

Denkbar ist es jedoch auch, dass besagte Mulde 1 als separates Anbauteil aus besagtem Werkstoff in eine vorbereitete Öffnung einer Bodenplatte 2 eingesetzt und an derselben befestigt wird/ist oder z. B. als Ölwanne über Flansche an einem Motorblock befestigt ist (nicht näher dargestellt).

In Anlehnung an bekannten Stand der Technik (vgl. beispielsweise die einleitend gewürdigte Druckschrift DE 103 61 045 A1) verfügt die Mulde 1 über eine Mehrzahl zueinander weitestgehend achsparallel ausgerichteter und angeordneter Bodensicken 3, die ihrerseits im Übergangsbereich vom Muldenboden 4 zur Muldenwandung 5 jeweils unmittelbar in zumindest eine in der gleichen Vertikalebene angeordnete Wandsicke 6 übergehen (Fig. 1-3). Vorliegend geht die Bodensicke 3 beidenends in je eine Wandsicke 6 über. D. h., Bodensicke 3 und jeweils zugeordnete Wandsicke/n 6 sind im Wesentlichen identisch ausgebildet, nämlich entweder nach Mulde-innen oder nach Mulde-außen ausgeformt und die Profilstruktur der Bodensicke 3 geht ohne Unterbrechung in die Profilstruktur der Wandsicke/n 6 über. Es wird demgemäß auch im Übergangsbereich vom Muldenboden 4 zur Muldenwandung 5 im Wesentlichen die jeweilige Profilstruktur der Boden- und Wandsicke/n 3, 6 beibehalten.

Wie insbesondere den Fig. 1 und 3 weiter zu entnehmen ist, sind benachbart angeordnete Bodensicken 3 und benachbart angeordnete Wandsicken 6 jeweils alternierend nach Muldeinnen oder Mulde-außen ausgeformt, d. h., die Ausformung benachbarter Boden- und Wandsicken 3, 6 kehrt sich von Sicke zu Sicke um.

Wie bereits einleitend ausgeführt, bewirkt eine derartige Sickenstruktur bzw. ein derartiges Sickenbild nach dem Stand der Technik einen relativ zug- und druckweichen Übergangsbereich vom Muldenboden 4 zur Muldenwandung 5 respektive Berandungsbereich des Muldenbodens 4, welcher "Ziehharmonika"-ähnlich infolge statischer Belastungen durch Nutzlasten und/oder Missbrauchslasten nachteilig zu erhöhter Verformung und im Fahrbetrieb zu erhöhten Bodeneigenschwingungen neigt. Beispielgebend sind in den Fig. 4 und 5 diesbezügliche Lastzustände des besagten zug- und druckweichen Übergangsbereiches vom Muldenboden 4 zur Muldenwandung 5 der in Rede stehenden Mulde 1 und des Muldenbodens 4 derselben schematisch dargestellt, wobei ein lastfreier Zustand durch eine durchgezogene und ein Belastungszustand durch eine gestrichelte Linienführung dargestellt sind.

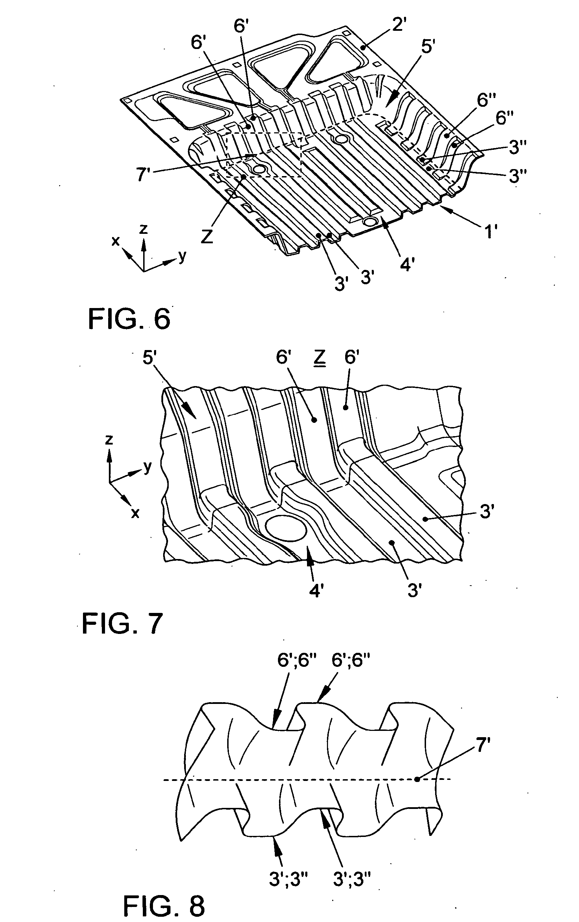

Um dem vorstehend beschriebenen nachteiligen Umstand zu begegnen, wird gemäß den Fig. 6 bis 11 nunmehr eine Mulde 1' in einer Bodenplatte 2' einer Karosserie, insbesondere einer Fahrzeugkarosserie, vorgeschlagen, welche eine oder mehrere den Muldenboden 4' versteifende erste Bodensicken 3' und eine oder mehrere die Muldenwandung 5' versteifende erste Wandsicken 6' aufweist, wobei zumindest eine erste Bodensicke 3' und zumindest eine zugeordnete erste Wandsicke 6' derart in einer gemeinsamen vertikalen Ebene angeordnet und derart ausgeformt sind, dass die Profilstruktur der ersten Bodensicke 3' im Übergangsbereich vom Muldenboden 4' zur Muldenwandung 5' zwar an die Profilstruktur der zugeordneten ersten Wandsicke 6' anschließt, bei der jedoch entgegen der oben beschriebenen herkömmlichen Ausgestaltung die Ausformung der ersten Wandsicke 6' im Hinblick auf die Ausformung der ersten Bodensicke 3' derart geändert ist, dass die erste Bodensicke 3' nach Mulde-innen und die zugeordnete erste Wandsicke 6' nach Mulde-außen oder umgekehrt ausgeformt sind. Die Ausformungen der jeweils zugeordneten Boden- und Wandsicken 3', 6' kehren sich sozusagen um bzw. sind umgestülpt.

Fig. 6 zeigt eine derartig ausgebildete Mulde 1', welche vorliegend einstückig in den hinteren Bereich einer Bodenplatte 2' eines Fahrzeugs eingeformt ist und heckseitig offen eine Kofferraummulde ausbildet, die von einer hier nicht näher dargestellten, jedoch an sich bekannten und in Fahrzeugquerrichtung (Y-Richtung) sich erstreckenden Heckschürze geschlossen wird.

Im Besonderen ist Fig. 6 ein Sickenbild zu entnehmen, welches zunächst eine Mehrzahl langgestreckte und zueinander weitestgehend achsparallel respektive benachbart angeordnete sowie sich in Fahrzeuglängsrichtung (X-Richtung) erstreckende erste Bodensicken 3' zeigt, die in Fahrzeugquerrichtung (Y-Richtung) gesehen alternierend nach Mulde-innen oder Mulde-außen ausgeformt sind (vgl. insbes. auch Fig. 7 und 8).

An ausgewählten ersten Bodensicken 3' schließt sich erfindungsgemäß in einer gemeinsamen vertikalen Ebene stirnseitig eine erste Wandsicke 6' an, wobei der Anschluss im besagten Übergangsbereich vom Muldenboden 4' zur Muldenwandung 5' vorgesehen ist, und wobei sich die Ausformungen der jeweils zugeordneten ersten Boden- und Wandsicken 3', 6' wie vorstehend beschrieben umkehren.

Durch diese Maßnahme ist im Übergangsbereich vom Muldenboden 4' zur Muldenwandung 5' bzw. im Übergangsbereich von der Bodensicke 3' zur zugeordneten Wandsicke 6' ein im Wesentlichen unverformter zug- und druckfester Abschnitt geschaffen, der sich vorteilhaft auf die Steifigkeit und Festigkeit der Mulde 1' und deren Resonanzverhalten auswirkt.

Sind, wie in den Fig. 6 bis 8 gezeigt, eine Mehrzahl nebeneinander angeordneter Boden- und zugeordnete Wandsicken 3', 6' vorgesehen, ergibt sich vorteilhaft ein im besagten Übergangsbereich integriertes steifes Zug-Druck-Band 7', welches sich längs des Übergangsbereiches, d.h., sich in Umfangsrichtung der Mulde 1' erstreckt und eine weiter erhöhte Steifigkeit und Festigkeit der Mulde 1' bewirkt.

Aufgrund der Tatsache, dass gemäß Fig. 6 der Muldenboden 4' der Mulde 1' eine im Wesentlichen rechteckige, d. h., eine an die Grundfläche eines Polygons angelehnte Grundfläche aufweist, bietet es sich vorteilhaft an, in den Übergangsbereichen vom Muldenboden 4' zur Muldenwandung 5', welche weitestgehend achsparallel zu den ersten Bodensicken 3' angeordnet und bislang unversteift sind, zweite Bodensicken 3" mit erfindungsgemäß zugeordneten zweiten Wandsicken 6" vorzusehen, welche quer zu besagten ersten Bodensicken 3' ausgerichtet und angeordnet sind. Durch diese Maßnahme ist es gestattet, weitestgehend den gesamten Übergangsbereich vom Muldenboden 4' zur Muldenwandung 6' als steifes Zug-Druck-Band 7' in Umfangsrichtung der Mulde 1' auszubilden.

Insoweit können erste Boden- und Wandsicke 3', 6' auch als Hauptsicken und zweite Boden- und Wandsicken 3", 6" auch als Nebensicken bezeichnet werden.

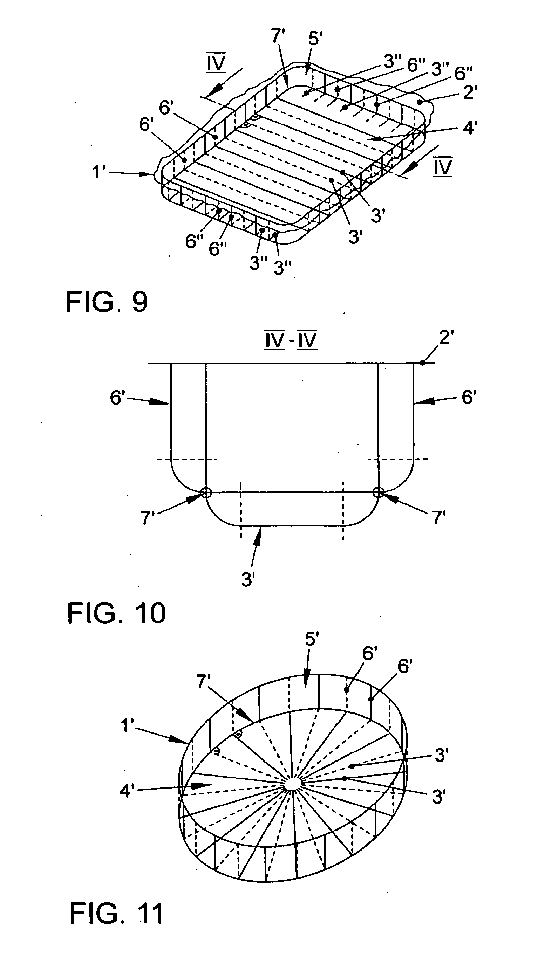

Das Ausführungsbeispiel gemäß den Fig. 9 und 10 unterscheidet sich zum vorbeschriebenen dadurch, dass eine erfindungsgemäß mit ersten und zweiten Boden- und Wandsicken 3', 6'; 3", 6" ausgestattete und umlaufend geschlossene Mulde 1' gezeigt ist, wobei hier der Einfachheit halber lediglich äußerst schematisch die Sickenspuren der unterschiedlich ausgeformten Boden- und Wandsicken 3', 6'; 3", 6" dargestellt sind.

So sind die Sickenspuren der nach Mulde-innen ausgeformten Boden- und Wandsicken 3', 6'; 3", 6" mittels einer durchgehenden und die Sickenspuren der nach Mulde-außen ausgeformten Boden- und Wandsicken 3', 6'; 3", 6" mittels einer gestrichelten Linienführung gekennzeichnet. Das Sickenbild ist derart gewählt, dass im Übergangsbereich vom Muldenboden 4' zur Muldenwandung 5' ein umlaufendes steifes Zug-Druck-Band 7' realisiert ist.

Die vorstehenden Ausführungsbeispiele stellen im Wesentlichen auf eine Mulde 1' mit einer Mehrzahl Boden- und zugeordneten Wandsicken 3', 6'; 3", 6" ab, die ihrerseits jeweils zueinander weitestgehend achsparallel ausgerichtet und angeordnet sind.

Die Erfindung beschränkt sich jedoch nicht auf diese Ausführungsbeispiele, sondern erfasst auch strahlen- oder sternförmige Sickenbilder in Alleinstellung oder in Kombination mit einem oder mehreren Sickenbildern, die eine weitestgehend achsparallele Ausrichtung und Anordnung einer Mehrzahl Boden- und zugeordneten Wandsicken 3', 6'; 3", 6" vorsehen (nicht näher dargestellt).

Beispielgebend ist in Fig. 11 eine Mulde 1' mit einer kreisförmigen Grundfläche gezeigt, wobei ein sternförmiges Sickenbild favorisiert ist, bei welchem sich erste Bodensicken 3' von einem mittleren Abschnitt des Muldenbodens 4' ausgehend radial nach außen erstrecken und an erfindungsgemäß zugeordnete erste Wandsicken 6' angeschlossen sind. Auch hier sind der Einfachheit halber lediglich äußerst schematisch die Sickenspuren der unterschiedlich ausgeformten ersten Boden- und Wandsicken 3', 6' dargestellt, wobei die Sickenspuren der nach Mulde-innen ausgeformten Boden- und Wandsicken 3', 6' mittels einer durchgehenden und die Sickenspuren der nach Mulde-außen ausgeformten Boden- und Wandsicken 3', 6' mittels einer gestrichelten Linienführung gekennzeichnet sind. Das Sickenbild ist derart gewählt, dass im Übergangsbereich vom Muldenboden 4' zur Muldenwandung 5' ein umlaufendes steifes Zug-Druck-Band 7' realisiert ist.

Des Weiteren sind in den Zeichnungsfiguren erste bzw. zweite Bodensicken 3', 3" gezeigt, welche senkrecht (in einem Winkel von 90°) auf einen geradlinigen Übergangsbereich vom Muldenboden 4' zur Muldenwandung 5' (vgl. insbes. Fig. 6 bis 9) bzw. senkrecht (in einem Winkel von 90°) auf eine an einen gekrümmten Übergangsbereich vom Muldenboden 4' zur Muldenwandung 5' angelegte, hier nicht näher dargestellte Tangente ausgerichtet sind (vgl. insbes. Fig. 11). An besagte erste bzw. zweite Bodensicken 3', 3" schließen sich dann erfindungsgemäß jeweils erste bzw. zweite Wandsicken 6', 6" an.

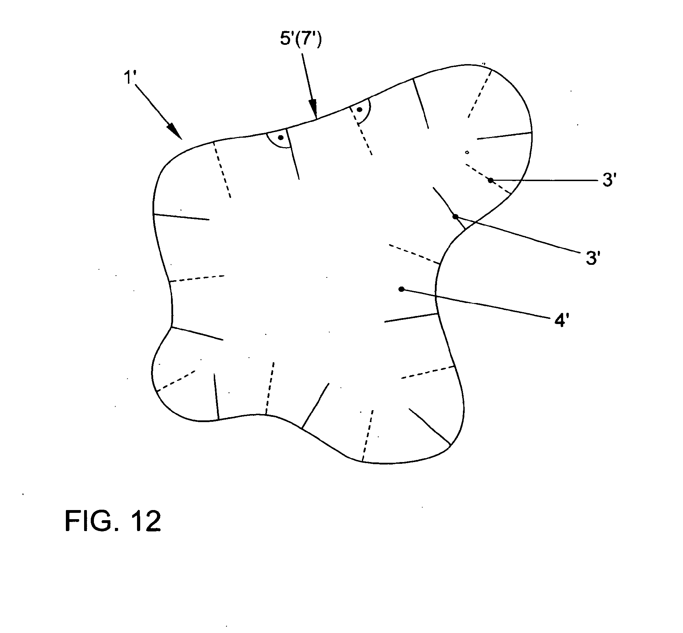

Fig. 12 zeigt schließlich beispielgebend die Draufsicht auf eine Grundfläche eines Muldenbodens 4', dessen Außenkontur durch eine Freiformkurve mit einer bestimmten (beliebigen) Anzahl Krümmungen gekennzeichnet ist. Wie ersichtlich, sind eine Vielzahl Sickenspuren erster Bodensicken 3' weitestgehend gleichmäßig über den Randbereich des Muldenbodens 4' verteilt angeordnet und senkrecht (in einem Winkel von 90°) auf eine an einen gekrümmten Übergangsbereich vom Muldenboden 4' zur Muldenwandung 5' angelegte, hier nicht näher dargestellte Tangente ausgerichtet sind. An besagte erste Bodensicke 3' schließen sich erfindungsgemäß die hier nicht näher dargestellten ersten Wandsicken 6' an.

Demgegenüber kann es jedoch auch angezeigt sein und ist demgemäß durch die Erfindung mit erfasst, dass erste bzw. zweite Bodensicken 3', 3" in einem von der Senkrechten, d. h., in einem vom 90°-Winkel abweichenden Winkel auf besagten geradlinigen Übergangsbereich vom Muldenboden 4' zur Muldenwandung 5' bzw. auf eine an einen gekrümmten Übergangsbereich vom Muldenboden 4' zur Muldenwandung 5' angelegte Tangente ausgerichtet sind, wodurch besonderen Versteifungsanfoderungen in weiten Grenzen Rechnung getragen werden kann (nicht näher dargestellt).

### Bezugszeichenliste

- 1: Mulde
- 2: Bodenplatte
- 3: Bodensicke
- 4: Muldenboden
- 5: Muldenwandung
- 6: Wandsicke

- 1': Mulde
- 2': Bodenplatte
- 3': erste Bodensicke
- 3": zweite Bodensicke
- 4': Muldenboden
- 5': Muldenwandung
- 6': erste Wandsicke
- 6": zweite Wandsicke
- 7': Zug-Duck-Band

## Patentansprüche

1. Mulde (1') in einer Platte (2') eines Fahrzeugs, mit einem Muldenboden (4'), der seinerseits in eine Muldenwandung (5') übergeht, wobei die Mulde (1') eine oder mehrere den Muldenboden (4') versteifende erste Bodensicken (3') und eine oder mehrere die Muldenwandung (5') versteifende erste Wandsicken (6') aufweist, wobei zumindest eine erste Bodensicke (3') und zumindest eine zugeordnete erste Wandsicke (6') derart in einer gemeinsamen vertikalen Ebene angeordnet und derart ausgeformt sind, dass die Profilstruktur der ersten Bodensicke (3') im Übergangsbereich vom Muldenboden (4') zur Muldenwandung (5') an die Profilstruktur der zugeordneten ersten Wandsicke (6') anschließt, **dadurch gekennzeichnet daß** die Ausformung der besagten ersten Wandsicke (6') im Hinblick auf die Ausformung der ersten Bodensicke (3') derart geändert ist, dass die erste Bodensicke (3') nach Mulde-innen und die zugeordnete erste Wandsicke (6') nach Mulde-außen oder umgekehrt ausgeformt sind.

2. Mulde (1') nach Anspruch 1, **dadurch gekennzeichnet, dass** die Mulde (1') in einer Bodenplatte (2') einer Karosserie, insbesondere einer Fahrzeugkarosserie angeordnet ist, mit einem Muldenboden (4'), der seinerseits in eine Muldenwandung (5') übergeht, wobei die Mulde (1') eine oder mehrere den Muldenboden (4') versteifende erste Bodensicken (3') und eine oder mehrere die Muldenwandung (5') versteifende erste Wandsicken (6') aufweist, wobei zumindest eine erste Bodensicke (3') und zumindest eine zugeordnete erste Wandsicke (6') derart in einer gemeinsamen vertikalen Ebene angeordnet und derart ausgeformt sind, dass die Profilstruktur der ersten Bodensicke (3') im Übergangsbereich vom Muldenboden (4') zur Muldenwandung (5') an die Profilstruktur der zugeordneten ersten Wandsicke (6') anschließt, und wobei die Ausformung der besagten ersten Wandsicke (6') im Hinblick auf die Ausformung der ersten Bodensicke (3') derart geändert ist, dass die erste Bodensicke (3') nach Mulde-innen und die zugeordnete erste Wandsicke (6') nach Mulde-außen oder umgekehrt ausgeformt sind.

3. Mulde (1') nach Anspruch 1 oder 2, **dadurch gekennzeichnet, dass** die Mulde (1') eine oder mehrere den Muldenboden (4') versteifende zweite Bodensicken (3") aufweist, die ihrerseits quer zu den ersten Bodensicken (3') ausgerichtet und angeordnet sind, wobei zumindest eine zweite Bodensicke (3") und zumindest eine zugeordnete zweite Wandsicke (6") derart in einer gemeinsamen vertikalen Ebene angeordnet und derart ausgeformt sind, dass die Profilstruktur der zweiten Bodensicke (3") im Übergangsbereich vom Muldenboden (4') zur Muldenwandung (5') an die Profilstruktur der zugeordneten zweiten Wandsicke (6") anschließt, und wobei die Ausformung der besagten zweiten Wandsicke (6") im Hinblick auf die Ausformung der zweiten Bodensicke (3") derart geändert ist, dass die zweite Bodensicke (3") nach Mulde-innen und die zugeordnete zweite Wandsicke (6") nach Mulde-außen oder umgekehrt ausgeformt sind.

4. Mulde (1') nach einem der Ansprüche 1 bis 3, **dadurch gekennzeichnet, dass** bei einer Mehrzahl benachbart angeordneter Bodensicken (3'; 3") und benachbart angeordneter, den Bodensicken (3'; 3") zugeordneter Wandsicken (6'; 6"), die benachbart angeordneten Bodensicken (3'; 3") und die benachbart angeordneten Wandsicken (6'; 6") jeweils alternierend nach Mulde-innen oder Mulde-außen ausgeformt sind.

5. Mulde (1') nach einem der Ansprüche 1 bis 4, **dadurch gekennzeichnet, dass** eine Mehrzahl erster Boden- und zugeordneter Wandsicken (3', 6') und/oder eine Mehrzahl zweiter Boden- und zugeordneter Wandsicken (3", 6") jeweils zueinander weitestgehend achsparallel ausgerichtet und angeordnet sind.

6. Mulde (1') nach einem der Ansprüche 1 bis 5, **dadurch gekennzeichnet, dass** eine Mehrzahl erster Boden- und zugeordneter Wandsicken (3', 6') derart zueinander ausgerichtet und angeordnet sind, dass ein strahlen- oder sternförmiges Sickenbild realisiert ist.

7. Mulde (1') nach einem der Ansprüche 1 bis 6, **dadurch gekennzeichnet, dass** der Muldenboden (4') eine Grundfläche aufweist, die an die Grundfläche eines Polygons angelehnt ist.

8. Mulde (1') nach einem der Ansprüche 1 bis 7, **dadurch gekennzeichnet, dass** der Muldenboden (4') eine zumindest abschnittsweise gerundete oder eine kreisförmige Grundfläche aufweist.

9. Mulde (1') nach einem der Ansprüche 1 bis 8, **dadurch gekennzeichnet, dass** bei einer Mehrzahl erster oder/und zweiter Boden- und zugeordneter Wandsicken (3', 6'; 3", 6") dieselben derart angeordnet sind, dass der Übergangsbereich vom Muldenboden (4') zur Muldenwandung (5') zumindest abschnittsweise nach Art eines in besagten Übergangsbereich integrierten steifen Zug-Druck-Bandes (7') ausgebildet ist.

10. Mulde (1') nach einem der Ansprüche 1 bis 9, **dadurch gekennzeichnet, dass** die Mulde (1') in eine Bodenplatte (2') aus Metall, einem Kunststoff, einem Verbundwerkstoff oder jedwedem anderen denkbaren geeigneten Werkstoff einstückig eingeformt oder als separates Anbauteil aus besagtem Werkstoff in eine vorbereitete Öffnung besagter Bodenplatte (2') eingesetzt und an derselben befestigt ist.

11. Mulde (1') nach Anspruch 10, **dadurch gekennzeichnet, dass** die Mulde (1') nach einem Tiefzieh-Verfahren hergestellt ist.

## Claims

1. Well (1') in a panel (2') of a vehicle, with a well bottom (4') which, in turn, merges into a well wall (5'), wherein the well (1') has one or more first bottom ribs (3') reinforcing the well bottom (4') and one or more first wall ribs (6') reinforcing the well wall (5'), wherein at least a first bottom rib (3') and at least one associated first wall rib (6') are arranged and formed in a common vertical plane in such a way that the profile structure of the first bottom rib (3') adjoins the profile structure of the associated first wall rib (6') in the transition region from the well bottom (4') to the well wall (5'), **characterized in that** the formation of the said first wall rib (6') changes with respect to the formation of the first bottom rib (3') in such a way that the first bottom rib (3') is formed towards the well interior and the associated first wall rib (6') is formed towards the well exterior, or vice versa.

2. Well (1') according, to Claim 1, **characterized in that** the well (1') is arranged in a bottom panel (2') of a body, in particular a vehicle body, with a well bottom (4') which, in turn, merges into a well wall (5'), wherein the well (1') has one or more first bottom ribs (3') reinforcing the well bottom (4') and one or more first wall ribs (6') reinforcing the well wall (5'), wherein at least a first bottom rib (3') and at least one associated first wall rib (6') are arranged and formed in a common vertical plane in such a way that the profile structure of the first bottom rib (3') adjoins the profile structure of the associated first wall rib (6') in the transition region from the well bottom (4') to the well wall (5'), and wherein the formation of the said first wall rib (6') changes with respect to the formation of the first bottom rib (3') in such a way that the first bottom rib (3') is formed towards the well interior and the associated first wall rib (6') is formed towards the well exterior, or vice versa.

3. Well (1') according to Claim 1 or 2, **characterized in that** the well (1') has one or more second bottom ribs (3''), which reinforce the well bottom (4') and which in turn are aligned and arranged transversally to the first bottom ribs (3'), wherein at least one second bottom rib (3'') and at least one associated second wall rib (6'') are arranged and formed in a common vertical plane in such a way that the profile structure of the second bottom rib (3'') adjoins the profile structure of the associated second wall rib (6'') in the transition region from the well bottom (4') to the well wall (5'), and wherein the formation of the said second wall rib (6'') changes with respect to the formation of the second bottom rib (3'') in such a way that the second bottom rib (3'') is formed towards the well interior and the associated second wall rib (6'') is formed towards the well exterior, or vice versa.

4. Well (1') according to one of Claims 1 to 3, **characterized in that**, with a plurality of adjacently arranged bottom ribs (3'; 3'') and adjacently arranged wall ribs (6'; 6'') assigned to the bottom ribs (3'; 3''), the adjacently arranged bottom ribs (3'; 3'') and the adjacently arranged wall ribs (6'; 6'') are in each case formed in an alternating manner towards the well interior or well exterior.

5. Well (1') according to one of Claims 1 to 4, **characterized in that** a plurality of first bottom and associated wall ribs (3', 6') and/or a plurality of second bottom and associated wall ribs (3'', 6'') are in each case oriented and arranged as far as possible in an axially parallel manner to one another.

6. Well (1') according to one of Claims 1 to 5, **characterized in that** a plurality of first bottom and associated wall ribs (3', 6') are oriented and arranged with respect to one another in such a way that a ray-shaped or star-shaped rib pattern is produced.

7. Well (1') according to one of Claims 1 to 6, **characterized in that** the well bottom (4') has a base which resembles the base of a polygon.

8. Well (1') according to one of Claims 1 to 7, **characterized in that** the well bottom (4') has an at least partially rounded or a circular base.

9. Well (1') according to one of Claims 1 to 8, **characterized in that**, with a plurality of first and/or second bottom and associated wall ribs (3', 6'; 3'', 6''), they are arranged in such a way that the transition region from the well bottom (4') to the well wall (5') is formed at least partially in the manner of a rigid tension-compression band (7') integrated into the said transition region.

10. Well (1') according to one of Claims 1 to 9, **characterized in that** the well (1') is integrally formed into a bottom panel (2') made of metal, a plastic, a composite material or any other conceivable suitable material or, as a separate attachment part made of the said material, is inserted into a prepared opening of the said bottom plate (2') and fastened thereto.

11. Well (1') according to Claim 10, **characterized in that** the well (1') is produced by a deep-drawing process.

## Revendications

1. Cavité en auge (1') dans une plaque (2') d'un véhicule, avec un fond d'auge (4'), qui se prolonge de son côté en une paroi d'auge (5'), dans laquelle l'auge (1') présente une ou plusieurs premières moulures de fond (3') renforçant le fond d'auge (4') et une ou plusieurs premières moulures de paroi (6') renforçant la paroi d'auge (5'), dans laquelle au moins une première moulure de fond (3') et au moins une première moulure de paroi associée (6') sont disposées de telle manière dans un plan vertical commun et sont formées de telle manière que la structure profilée de la première moulure de fond (3') se raccorde, dans la zone de transition du fond d'auge (4') à la paroi d'auge (5'), à la structure profilée de la première moulure de paroi associée (6'), **caractérisée en ce que** la déformation de ladite première moulure de paroi (6') est modifiée par rapport à la déformation de la première moulure de fond (3') d'une manière telle que la première moulure de fond (3') soit déformée vers l'intérieur de l'auge et que la première moulure de paroi associée (6') soit déformée vers l'extérieur de l'auge, ou inversement.

2. Cavité en auge (1') selon, la revendication 1, **caractérisée en ce que** la cavité en auge (1') est disposée dans une plaque de fond (2') d'une carrosserie, en particulier d'une carrosserie de véhicule, avec un fond d'auge (4'), qui se prolonge de son côté en une paroi d'auge (5'), dans laquelle l'auge (1') présente une ou plusieurs premières moulures de fond (3') renforçant le fond d'auge (4') et une ou plusieurs premières moulures de paroi (6') renforçant la paroi d'auge (5'), dans laquelle au moins une première moulure de fond (3') et au moins une première moulure de paroi associée (6') sont disposées de telle manière dans un plan vertical commun et sont formées de telle manière que la structure profilée de la première moulure de fond (3') se raccorde, dans la zone de transition du fond d'auge (4') à la paroi d'auge (5'), à la structure profilée de la première moulure de paroi associée (6'), et dans laquelle la déformation de ladite première moulure de paroi (6') est modifiée par rapport à la déformation de la première moulure de fond (3') d'une manière telle que la première moulure de fond (3') soit.déformée vers l'intérieur de l'auge et que la première moulure de paroi associée (6') soit déformée vers l'extérieur de l'auge, ou inversement.

3. Cavité en auge (1') selon la revendication 1 ou 2, **caractérisée en ce que** l'auge (1') présente une ou plusieurs deuxièmes moulures de fond (3") renforçant le fond d'auge (4'), qui sont de leur côté orientées et disposées transversalement aux premières moulures de fond (3'), dans laquelle au moins une deuxième moulure de fond (3") et au moins une deuxième moulure de paroi associée (6") sont disposées de telle manière dans un plan vertical commun et sont formées de telle manière que la structure profilée de la deuxième moulure de fond (3") se raccorde, dans la zone de transition du fond d'auge (4') à la paroi d'auge (5'), à la structure profilée de la deuxième moulure de paroi associée (6"), et dans laquelle la déformation de ladite deuxième moulure de paroi (6") est modifiée, par rapport à la déformation de la deuxième moulure de fond (3"), d'une manière telle que la deuxième moulure de fond (3") soit déformée vers l'intérieur de l'auge et que la deuxième moulure de paroi associée (6") soit déformée vers l'extérieur de l'auge, ou inversement.

4. Cavité en auge (1') selon l'une quelconque des revendications 1 à 3, **caractérisée en ce que**, avec une pluralité de moulures de fond (3'; 3") disposées de façon voisine et de moulures de paroi (6'; 6") associées aux moulures de fond (3' ; 3") et disposées de façon voisine, les moulures de fond (3'; 3") disposées de façon voisine et les moulures de paroi (6'; 6"), disposées de façon voisine sont déformées respectivement en alternance vers l'intérieur de l'auge ou vers l'extérieur de l'auge.

5. Cavité en auge (1') selon l'une quelconque des revendications 1 à 4, **caractérisée en ce qu'**une pluralité de premières moulures de fond et de premières moulures de paroi associées (3', 6') et/ou une pluralité de deuxièmes moulures de fond et de deuxièmes moulures de paroi associées (3", 6") sont chaque fois orientées et disposées avec leurs axes très largement paralléles l'un à l'autre.

6. Cavité en auge (1') selon l'une quelconque des revendications 1 à 5, **caractérisée en ce qu'**une pluralité de premières moulures de fond et de premières moulures de paroi associées (3', 6') sont orientées et disposées l'une par rapport à l'autre de telle manière qu'il se soit formé un motif de moulures en forme de rayons ou d'étoile.

7. Cavité en auge (1') selon l'une quelconque des revendications 1 à 6, **caractérisée en ce que** le fond d'auge (4') présente une surface de base, qui est basée sur la surface de base d'un polygone.

8. Cavité en auge (1') selon l'une quelconque des revendications 1 à 7, **caractérisée en ce que** le fond d'auge (4') présente une surface de base qui est au moins localement arrondie ou qui est circulaire.

9. Cavité en auge (1') selon l'une quelconque des revendications 1 à 8, **caractérisée en ce que**, avec une pluralité de premières et/ou de deuxièmes moulures de fond et moulures de paroi associées (3', 6'; 3", 6"), celles-ci sont disposées de telle manière que la zone de transition du fond d'auge (4') à la paroi d'auge (5') soit formée au moins localement à la manière d'une bande de traction-compression rigide (7') intégrée dans ladite zone de transition.

10. Cavité en auge (1') selon l'une quelconque des revendications 1 à 9, **caractérisée en ce que** la cavité en auge (1') est façonnée dans une plaque de fond (2') en métal, en matière plastique, en un matériau composite ou en tout autre matériau approprié imaginable ou est insérée comme un composant séparé en ce matériau dans une ouverture préparée de ladite plaque de fond (2') et est fixée à celle-ci.

11. Cavité en auge (1') selon la revendication 10, **caractérisée en ce que** la cavité en auge (1') est fabriquée par un procédé d'emboutissage profond.
